# EUROPÄISCHE PATENTSCHRIFT

(11) **EP 3 772 597 B1**
(45) Veröffentlichungstag und Bekanntmachung des Hinweises auf die Patenterteilung: **29.06.2022**
(21) Anmeldenummer: 20185480.9
(22) Anmeldetag: 13.07.2020
(51) Int. Cl.: F16B 13/06

(54) **SPREIZANKER UND VERFAHREN ZUM VERANKERN EINES SPREIZANKERS**
EXPANDABLE ANCHOR AND METHOD FOR ANCHORING AN EXPANDABLE ANCHOR
ANCRE EXTENSIBLE ET PROCÉDÉ D'ANCRAGE D'UNE ANCRE EXTENSIBLE

(30) Priorität: 07.08.2019 DE 102019121316; 17.06.2020 DE 102020115908
(43) Veröffentlichungstag der Anmeldung: 10.02.2021
(73) Patentinhaber: fischerwerke GmbH & Co. KG, 72178 Waldachtal (DE)
(72) Erfinder: Hacker, Oliver, 72227 Egenhausen (DE)
(74) Vertreter: Suchy, Ulrich Johannes

(56) Entgegenhaltungen:
- DE-A1- 10 106 844
- DE-U1- 8 521 291

## Beschreibung

Die Erfindung betrifft einen Spreizanker mit den Merkmalen des Oberbegriffs des Anspruchs 1 sowie ein Verfahren zum Verankern eines solchen Spreizankers mit den Merkmalen des Oberbegriffs des Anspruchs 13. Spreizanker dienen zu einer Verankerung, das heißt zu einer Befestigung in einem meist gebohrten und normalerweise zylindrischen Ankerloch in einem Ankergrund aus beispielsweise Stein, Mauerwerk oder Beton.

Bekannte Spreizanker weisen beispielsweise einen stangenförmigen Ankerschaft mit einem kegelstumpfförmigen Spreizkörper und eine Spreizhülse auf, die durch Einziehen des Spreizkörpers in die Spreizhülse aufweitbar ist, was als "Aufspreizen" bezeichnet wird. Zum Aufspreizen ist die Spreizhülse typischerweise durch Schlitze in Spreizlaschen unterteilt, die beim Einziehen des Spreizkörpers in die Spreizhülse auseinandergedrückt, das heißt aufgespreizt werden. Durch das Aufspreizen wird die Spreizhülse gegen eine Umfangswand des Ankerlochs gedrückt, wodurch der Spreizanker in dem Ankerloch im Ankergrund gehalten, das heißt verankert ist.

Die Offenlegungsschrift DE 101 06 844 A1 offenbart einen Spreizanker, bei dem zu einem Vorspreizen ein Tellerfederpaket auf dem Ankerschaft angeordnet ist, das von einem das Tellerfederpaket umschließenden Korb mit Klammern gespannt gehalten wird. Nach einem Einbringen des Spreizankers in ein Ankerloch werden die Klammern außer Eingriff gebracht, woraufhin das Tellerfederpaket den Spreizkörper über den Ankerschaft in die Spreizhülse zieht und die Spreizhülse dadurch aufspreizt. Anschließend wird mit einer auf den Ankerschaft geschraubten Mutter der Spreizkörper weiter in die Spreizhülse eingezogen und die Spreizhülse stärker aufgespreizt.

Aufgabe der Erfindung ist, einen selbst aufspreizenden Spreizanker vorzuschlagen, der mit niedriger Kraft in ein Ankerloch eingebracht werden kann.

Diese Aufgabe wird erfindungsgemäß durch die Merkmale des Anspruchs 1 gelöst. Der erfindungsgemäße Spreizanker weist einen Spreizkörper und eine Spreizhülse auf, wobei die Spreizhülse durch Einziehen des Spreizkörpers in die Spreizhülse aufspreizbar ist. Gleichbedeutend mit dem Einziehen des Spreizkörpers in die Spreizhülse ist ein Aufschieben der Spreizhülse auf den Spreizkörper.

Insbesondere ist die Spreizhülse durch Schlitze, die an einem Ende der Spreizhülse offen sind, in Spreizlaschen unterteilt, die durch Einziehen des Spreizkörpers in die Spreizhülse auseinandergedrückt, das heißt aufgespreizt werden. Spreizhülsen, die sich in anderer Weise aufspreizen oder aufweiten lassen, sind ebenso möglich.

Der Spreizanker erstreckt sich in Richtung einer Längsachse. Der Spreizkörper ist axialfest mit einem Ankerschaft verbunden, der die Spreizhülse durchgreift und auf dem die Spreizhülse in axialer Richtung des Ankerschafts verschiebbar ist, also in Längsrichtung des Ankerschafts. "Axialfest" meint, dass axial wirkende Kräfte vom Spreizkörper auf den Ankerschaft und umgekehrt übertragen werden können. Der Spreizkörper kann insbesondere als Konusmutter ausgebildet und auf den Ankerschaft, der in diesem Fall ein Außengewinde aufweist, aufgeschraubt sein, so dass durch die Gewindeverbindung axiale Kräfte übertragen werden können. Der Spreizkörper kann in diesem Fall am Ankerschaft axial bewegt werden, insbesondere durch eine Drehbewegung relativ zum Ankerschaft - er ist somit axial- aber nicht ortsfest am Ankerschaft angeordnet. Der Spreizkörper kann alternativ auch einstückig und starr mit dem Ankerschaft verbunden sein. Der Spreizkörper ist insbesondere kegelstumpfförmig. Andere Formen als ein Kegelstumpf sind für den Spreizkörper möglich. Beispielsweise kann der Spreizkörper keilförmig, pyramidenstumpfförmig oder stufenförmig sein.

Der erfindungsgemäße Spreizanker weist eine Vorspanneinrichtung für die Spreizhülse auf, die die Spreizhülse in einer nicht aufgespreizten Setzstellung vorgespannt hält. "Vorgespannt" meint, dass die Spreizhülse in der Setzstellung selbst derart unter Spannung steht, dass sie aufspreizt, wenn sie von der Vorspanneinrichtung freikommt, auch dann, wenn der Spreizkörper nicht in die Spreizhülse eingezogen wird. "Aufspreizen" bedeutet, dass der Durchmesser eines die Spreizhülse umschreibenden Umkreises in der Setzstellung kleiner ist, als nach dem Aufspreizen, also nachdem die Spreizhülse von der Vorspanneinrichtung freigekommen ist. Hierbei liegt der Umkreis in einer Radialebene zur Längsachse des Spreizankers.

Um in der Setzstellung eine Vorspannung zu erzeugen, wird die Spreizhülse vor dem Verbinden mit dem Ankerschaft voraufgespreizt, das heißt, sie wird derart plastisch verformt, dass sie beim Verbinden mit dem Ankerschaft und beim Überführen des Spreizankers in die Setzstellung elastisch radial zusammengepresst und damit elastisch vorgespannt und dadurch, bezogen auf die Längsachse, im Durchmesser verkleinert wird. In der Setzstellung wird die elastisch vorgespannte Spreizhülse von der Vorspanneinrichtung gehalten.

Insbesondere wird die Spreizhülse für die Setzstellung auf einen Durchmesser zusammengedrückt, der so klein ist, dass der Spreizanker mit geringer Kraft in das Ankerloch eingebracht werden kann. "Geringe Kraft" meint hier, dass der Spreizanker mit nur wenigen, beispielsweise zwei bis drei Hammerschlägen oder ganz ohne Hilfe eines Werkzeugs "per Hand" in das Ankerloch eingebracht werden kann. Insbesondere ist die Spreizhülse vor dem Verbinden mit dem Ankerschaft soweit aufgespreizt, dass sie nach dem Freikommen von der Vorspanneinrichtung an einer Umfangswand eines auf den Spreizanker abgestimmten Ankerlochs anliegt. Dieser Zustand kann als "aufgespreizter Montagezustand" bezeichnet werden.

In der nicht aufgespreizten Setzstellung weist die Spreizhülse des Ankerschafts insbesondere eine nahezu zylinderrohrförmige Gestalt auf. Hierdurch ist es einem Anwender möglich, den Spreizanker möglichst kraftfrei in das ebenfalls insbesondere zylindrische Ankerloch einzubringen. Kommt die Spreizhülse dann von der Vorspanneinrichtung frei, so nimmt die Spreizhülse eine Form mit größerem Durchmesser, insbesondere eine konische Form an. In dieser Form tritt die Spreizhülse mit der Umfangswand des Ankerlochs in Kontakt und fixiert den Spreizanker somit im Ankerloch vor. Generell wird der Durchmesser oder der Umfang der Spreizhülse vom Übergang von der nicht aufgespreizten Setzstellung zum aufgespreizten Montagezustand vergrößert.

Wie bereits ausgeführt, liegt in der nicht aufgespreizten Setzstellung die Spreizhülse nicht oder nur leicht an der Umfangswand des Ankerlochs an, so dass der Spreizanker kraftfrei oder mit geringer Kraft in das Ankerloch eingebracht werden kann. "Auf den Spreizanker abgestimmt" bedeutet, dass ein Durchmesser oder Umfang des Ankerlochs so groß ist, dass der Spreizanker mit in der Setzstellung nicht aufgespreizter Spreizhülse in das Ankerloch einbringbar ist und dass sich die Spreizhülse durch das Freikommen von der Vorspanneinrichtung soweit aufspreizen lässt, dass der Spreizanker im Ankerloch vorfixiert ist.

Zum Aufspreizen wird die Spreizhülse außer Eingriff von der Vorspanneinrichtung gebracht und spreizt dann von selbst, also ohne Wirkung des Spreizkörpers, in den aufgespreizten Montagezustand auf. Vorzugsweise wird anschließend der Spreizkörper in oder tiefer in die Spreizhülse eingezogen und die Spreizhülse dadurch weiter beziehungsweise stärker aufgespreizt, um den Spreizanker in dem Ankerloch in dem Ankergrund fester zu verankern, in dem die radial wirkende Spreizkraft vergrößert wird. Das Selbstaufspreizen der Spreizhülse hat den Zweck, die Spreizhülse axialfest und/oder drehfest im Ankerloch zu halten, um den Spreizkörper nachfolgend einziehen und die Spreizhülse stärker aufspreizen zu können, bis der gewünschte Endzustand erreicht ist, in dem der Spreizanker die einwirkenden Kräfte planmäßig in den Ankergrund übertragen kann. Ein starker Halt der Spreizhülse im Ankerloch durch das Selbstaufspreizen der Spreizhülse ist nicht notwendig, wenn auch nicht ausgeschlossen, weil die Spreizhülse nach dem Selbstaufspreizen durch Einziehen des Spreizkörpers mit hoher Kraft aufgespreizt und der Spreizanker dadurch fest im Ankerloch im Ankergrund verankert werden kann.

Vorteil der Erfindung ist, dass sie einen Spreizanker ermöglicht, der kraftfrei oder mit geringer Kraft in ein Ankerloch eingebracht werden kann, und der durch das Selbstaufspreizen in die Montagestellung ausreichenden Halt im Ankerloch bekommt, um die Spreizhülse durch Einziehen des Spreizkörpers aufspreizen zu können.

Die Vorspanneinrichtung kann die Spreizhülse beispielsweise nach Art eines Rings umschließen und die Spreizhülse dadurch vorgespannt in der nicht aufgespreizten Setzstellung halten. Beispielsweise umschließt die Vorspanneinrichtung freie Enden von Spreizlaschen der Spreizhülse und hält sie nach innen in Richtung des Ankerschafts gespannt. Sobald die Spreizlaschen von der Vorspanneinrichtung freikommen, federn sie radial nach außen, das heißt, sie spreizen auf.

Um die Spreizhülse oder beispielsweise ihre Spreizlaschen außer Eingriff von der Vorspanneinrichtung zu bekommen, wird die Vorspanneinrichtung bei einer Ausgestaltung der Erfindung in einer Längsrichtung des Spreizankers in Bezug auf die und relativ zur Spreizhülse bewegt. Die die Spreizhülse beziehungsweise freie Enden der Spreizlaschen der Spreizhülse radial haltende Vorspanneinrichtung wird in der Längsrichtung des Spreizankers von der Spreizhülse beziehungsweise von den freien Enden der Spreizlaschen weg bewegt, bis die Spreizhülse beziehungsweise die freien Enden der Spreizlaschen freikommen.

Bei einer bevorzugten Ausgestaltung der Erfindung weist der Spreizkörper die Vorspanneinrichtung auf. Beispielsweise weist er eine die Spreizhülse außen übergreifende, beispielsweise die Spreizhülse oder freie Enden der Spreizlaschen der Spreizhülse außen übergreifende und/oder umschließende Aufnahme auf, die die Spreizhülse oder die freien Enden ihrer Spreizlaschen in der nach innen beispielsweise zu dem Ankerschaft vorgespannten, nicht aufgespreizten Setzstellung hält. Durch das Freikommen der Spreizhülse beziehungsweise der freien Enden ihrer Spreizlaschen aus der Aufnahme beispielsweise durch ein axiales Wegbewegen der Aufnahme von der Spreizhülse beziehungsweise von den freien Enden ihrer Spreizlaschen kommt die Spreizhülse frei von der Vorspanneinrichtung und spreizt in die Montagestellung auf. Die Aufnahme ist bei einer Ausführungsform der Erfindung eine nach innen gerichtete Stufe, insbesondere eine umlaufende Ringstufe, in die die Spreizhülse beziehungsweise die freien Enden ihrer Spreizlaschen in der vorgespannten, nicht aufgespreizten Setzstellung greifen. Die nach innen gerichtete Ringstufe ist beispielsweise an einem der Spreizhülse zugewandten Stirnende des Spreizkörpers ausgebildet.

Um die Spreizhülse zum Außereingriffbringen von der Vorspanneinrichtung in Bezug auf die Vorspanneinrichtung in der Längsrichtung des Spreizankers bewegen zu können, sieht eine Ausgestaltung der Erfindung ein Schub- und Zugelement vor, welches beispielsweise durch eine Schnappverbindung oder eine Rastverbindung mit der Spreizhülse verbunden ist. Über das Schub- und Zugelement lässt sich die Spreizhülse von außerhalb des Ankerlochs bewegen, wenn sich die Spreizhülse im Ankerloch befindet. Vorzugsweise ist das Schub- und Zugelement rohrförmig und wird von dem Ankerschaft durchgriffen.

Eine Ausgestaltung der Erfindung sieht ein Federelement vor, das die Spreizhülse in Eingriff mit der Vorspanneinrichtung beaufschlagt, was bedeutet, dass das Federelement eine Kraft auf die Spreizhülse und/oder die Vorspanneinrichtung im Sinne eines Ineingriffhaltens der Spreizhülse in der vorgespannten, nicht aufgespreizten Setzstellung mit der Vorspanneinrichtung ausübt. Insbesondere sichert das Federelement somit den Spreizanker davor, ungewollt in den aufgespreizten Montagezustand überzugehen. Eine derartige Sicherung ist beispielsweise sinnvoll, wenn der Spreizanker transportiert wird. Weitere Sicherungsmöglichkeiten stellen beispielsweise eine Klebeverbindung zwischen der Spreizhülse und der Vorspanneinrichtung dar, die aufgebrochen wird, wenn der Spreizanker in den aufgespreizten Montagezustand übergeht. Auch eine reibschlüssige Sicherung der Spreizhülse an der Vorspanneinrichtung ist möglich.

Eine Weiterbildung der Erfindung sieht vor, dass das Federelement die Spreizhülse auf den Spreizkörper beaufschlagt, wenn die Spreizhülse außer Eingriff von der Vorspanneinrichtung ist. Das bedeutet, dass das Federelement eine Kraft auf die Spreizhülse und/oder den Spreizkörper im Sinne eines Einziehens des Spreizkörpers in die Spreizhülse oder eines Aufschiebens der Spreizhülse auf den Spreizkörper ausübt, wenn die Spreizhülse außer Eingriff von der Vorspanneinrichtung ist. Insbesondere beaufschlagt das Federelement die Spreizhülse und/oder den Spreizkörper so, dass sie reibschlüssig aneinander anliegen, um sie drehfest miteinander zu halten. Dadurch ist der Spreizkörper drehfest in der Spreizhülse gehalten, wenn die Spreizhülse nach dem Außereingriffbringen von der Vorspanneinrichtung selbst aufspreizt und dadurch drehfest im Ankerloch hält. Dadurch lässt sich beispielsweise der Ankerschaft in den Spreizkörper schrauben und der Spreizkörper dadurch in die Spreizhülse einziehen, ohne dass der Spreizkörper mit dem Ankerschaft mitdreht. Allerdings ist die Erfindung nicht auf Spreizanker mit einem in den Spreizkörper geschraubten oder schraubbaren Ankerschaft beschränkt.

Eine Ausgestaltung der Erfindung sieht ein tellerfederförmiges Federelement vor, das beispielsweise einstückig mit dem rohrförmigen Schub- und Zugelement sein kann. Beispielsweise kann das Federelement als axial federnder Flansch des rohrförmigen Schub- und Zugelements ausgebildet sein. Möglich ist auch ein axial federndes, das heißt axial elastisches, rohrförmiges oder anders ausgestaltetes Schub- und Zugelement, das zugleich das Federelement bildet.

Zum Verankern wird der Spreizanker in das Ankerloch im Ankergrund eingebracht, wobei beim Einbringen in das Ankerloch die Spreizhülse mit der Vorspanneinrichtung in Eingriff steht und von der Vorspanneinrichtung in der nicht aufgespreizten Setzstellung vorgespannt gehalten wird. Im Ankerloch wird die Spreizhülse außer Eingriff von der Vorspanneinrichtung gebracht und spreizt selbst auf. Vorzugsweise wird anschließend der Spreizkörper in die Spreizhülse eingezogen oder umgekehrt die Spreizhülse auf den Spreizkörper geschoben und dadurch stärker aufgespreizt, damit der Spreizanker fest im Ankerloch verankert ist.

Vorzugsweise muss das Federelement gespannt oder stärker gespannt werden, um die Spreizhülse beispielsweise durch eine Relativbewegung in Bezug auf die Vorspanneinrichtung in der Längsrichtung des Spreizankers außer Eingriff von der Vorspanneinrichtung zu bringen, so dass die Spreizhülse von selbst aufspreizt. Wird das Federelement anschließend losgelassen, beaufschlagt es den Spreizkörper in die Spreizhülse oder umgekehrt die Spreizhülse auf den Spreizkörper. Das heißt das Federelement drückt oder zieht die Spreizhülse so gegen den Spreizkörper, dass der Spreizkörper durch Reibschluss drehfest in der Spreizhülse gehalten ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines in der Zeichnung dargestellten Ausführungsbeispiels näher erläutert. Es zeigen:
- Figur 1: einen erfindungsgemäßen Spreizanker im Achsschnitt; und
- Figur 2: eine vergrößerte Einzelheit gemäß Kreis II in Figur 1.

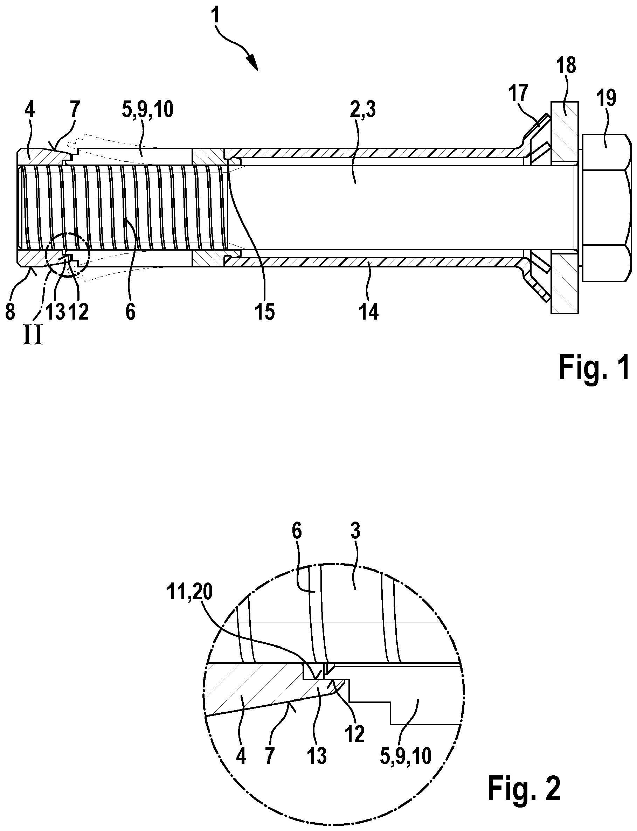

Der in Figur 1 dargestellte, erfindungsgemäße Spreizanker 1 weist eine Schraube 2, deren Schraubenschaft einen Ankerschaft 3 des Spreizankers 1 bildet, einen Spreizkörper 4 und eine Spreizhülse 5 auf.

Der Spreizkörper 4 ist ein rohrförmiges Bauteil mit einem koaxialen, ein Innengewinde aufweisenden Durchgangsloch, mit dem der Spreizkörper 4 auf ein Gewinde 6 des Ankerschafts 3 geschraubt ist. An einem Außenumfang weist der Spreizkörper 4 einen kegelstumpfförmigen Abschnitt, der auch als Spreizabschnitt 7 aufgefasst werden kann, und einen zylindrischen Abschnitt 8, der sich an ein durchmessergrößeres Ende des Spreizabschnitts 7 anschließt, auf. Wegen des kegelstumpfförmigen Spreizabschnitts 7 kann der Spreizkörper 4 auch als kegelstumpfförmig aufgefasst werden.

Die Spreizhülse 5 ist zylinderrohrförmig und besteht im Ausführungsbeispiel wie der Spreizkörper 4 aus Metall, wobei Metall nicht zwingend für die Erfindung ist. Die Spreizhülse 5 ist an einem durchmesserkleineren Stirnende des Spreizkörpers 4 in axialer Richtung beziehungsweise in Längsrichtung, in Richtung der Längsachse des Spreizankers 1, auf dem Ankerschaft 3 verschiebbar angeordnet. Die Spreizhülse 5 weist Längsschlitze 9 auf, die an einem dem Spreizkörper 4 zugewandten Stirnende der Spreizhülse 5 offen sind und die vor einem dem Spreizkörper 4 abgewandten Stirnende der Spreizhülse 5 enden. Die Längsschlitze 9 unterteilen die Spreizhülse 5 in Spreizlaschen 10, die sich in der Längsrichtung der Spreizhülse 5 erstrecken.

Wie in Figur 1 mit Strichlinien gezeichnet, sind die Spreizlaschen 10 bogenförmig oder schräg nach außen gebogen, so dass ihre freien, dem Spreizkörper 4 zugewandten Enden radialen Abstand vom Ankerschaft 3 und dessen Gewinde 6 aufweisen und sich radial außerhalb einer gedachten Hüllfläche des zylindrischen Abschnitts 8 des Spreizkörpers 4 und/oder außerhalb einer gedachten Hüllfläche eines ungeschlitzten Abschnitts der Spreizhülse 5 befinden. Die Form der Spreizhülse 5 mit den entsprechend den Strichlinien in Figur 1 nach außen gebogenen Spreizlaschen 10 wird hier als voraufgespreizte Stellung der Spreizhülse 5 beziehungsweise als Montagestellung bezeichnet.

An seinem durchmesserkleineren, der Spreizhülse 5 zugewandten Stirnende weist der Spreizkörper 4 eine nach innen gerichtete, umlaufende Ringstufe 11 an seinem Innenumfang auf, die in Figur 2 zu sehen ist. An ihren freien, dem Spreizkörper 4 zugewandten Enden weisen die Spreizlaschen 10 der Spreizhülse 5 außen Stufen 12 auf, die in die Ringstufe 11 des Spreizkörpers 4 greifen, wodurch die Spreizlaschen 10 elastisch radial nach innen zum Ankerschaft 3 beziehungsweise zu dessen Gewinde 6 vorgespannt sind, wie es in Figur 1 mit Volllinien gezeichnet ist. Nicht wesentlich ist, ob die Spreizlaschen 10 am Ankerschaft 3 beziehungsweise am Gewinde 6 anliegen, wenn sie radial nach innen vorgespannt sind, oder nicht. Im Ausführungsbeispiel stehen die Spreizlaschen 10 nicht nach außen über die Hüllfläche des zylindrischen Abschnitts 8 des Spreizkörpers 4 und nicht über die Hüllfläche des ungeschlitzten Abschnitts der Spreizhülse 5 über, wenn die Spreizlaschen 10 radial nach innen vorgespannt sind. Die in Figur 1 mit Volllinien gezeichnete Form der Spreizhülse 5 mit den radial nach innen gespannten Spreizlaschen 10 wird hier als vorgespannte, nicht aufgespreizte Setzstellung der Spreizhülse 5 bezeichnet.

Der Spreizkörper 4 mit der nach innen gerichteten Ringstufe 11 an seinem der Spreizhülse 5 zugewandten Stirnende, in die die freien Enden der Spreizlaschen 10 greifen, bildet eine Vorspanneinrichtung 13 des erfindungsgemäßen Spreizankers 1, die die Spreizlaschen 10 nach innen vorgespannt und damit die Spreizhülse 5 in der vorgespannten, nicht aufgespreizten Setzstellung hält. Die nach innen gerichtete Ringstufe 11 bildet eine Aufnahme 20 für die freien Enden der Spreizlaschen 10 der Spreizhülse 5.

Auf einer dem Spreizkörper 4 abgewandten Stirnseite der Spreizhülse 5 ist ein rohrförmiges Schub- und Zugelement 14 verschieblich auf dem Ankerschaft 3 angeordnet, das im Ausführungsbeispiel aus Kunststoff besteht, aber auch aus anderen Materialien bestehen kann. Ein Außendurchmesser des Schub- und Zugelements 14 entspricht einem Durchmesser der Hüllfläche des zylindrischen Abschnitts 8 des Spreizkörpers 4 und/oder einem Durchmesser des ungeschlitzten Abschnitts der Spreizhülse 5. Das Schub- und Zugelement 14 weist einen innen umlaufenden Wulst 15 an seinem der Spreizhülse 5 zugewandten Stirnende auf, der in eine außen umlaufende Rinne der Spreizhülse 5 nahe an deren dem Schub- und Zugelement 14 zugewandten Stirnende eingeschnappt ist. Die Rinne und der in sie eingeschnappte Wulst 15 bilden eine Schnappverbindung, die die Spreizhülse 5 mit dem Schub- und Zugelement 14 verbindet.

An einem der Spreizhülse 5 fernen Stirnende weist das rohrförmige Schub- und Zugelement 14 einen elastischen Flansch auf, der ein Federelement 17 bildet, das nach Art einer Tellerfeder in axialer Richtung federt. Im Ausführungsbeispiel weist das Federelement 17 die Form einer hohlen Lochscheibe mit einem radialen inneren und einem kegelstumpfförmigen äußeren Abschnitt auf. Die Form ist nicht zwingend für die Erfindung, wesentlich ist, dass das Schub- und Zugelement 14 in Richtung der Spreizhülse 5 federt.

Das Federelement 17 stützt sich über eine Unterlegscheibe 18 an einem Schraubenkopf 19 der Schraube 2 ab, deren Schraubenschaft den Ankerschaft 3 des erfindungsgemäßen Spreizankers 1 bildet. Das Federelement 17 weist eine Vorspannung auf und beaufschlagt die Spreizhülse 5 in der Längsrichtung beziehungsweise der axialen Richtung gegen den Spreizkörper 4, wodurch das Federelement 17 die freien Enden der Spreizlaschen 10 der Spreizhülse 5 in Eingriff in der Ringstufe 11 der Vorspanneinrichtung 13 und damit die Spreizhülse 5 in der vorgespannten, nicht aufgespreizten Setzstellung mit den radial nach innen vorgespannte Spreizlaschen 10 hält.

Zu einer Verankerung in einem nicht dargestellten, zylindrischen Ankerloch in einem Ankergrund wird der Spreizanker 1 so in das Ankerloch eingebracht, dass sich der Spreizkörper 4, die Spreizhülse 5 und ein Teil des rohrförmigen Schub- und Zugelements 14 in dem Ankerloch befinden. Ein Durchmesser des Ankerlochs ist so groß oder geringfügig größer wie ein größter Außendurchmesser des Spreizkörpers 4, ein größter Außendurchmesser der Spreizhülse 5 in der vorgespannten, nicht aufgespreizten Setzstellung oder ein größter Außendurchmesser des rohrförmigen Schub- und Zugelements 14. Eventuell kann das Ankerloch auch ein geringes Untermaß aufweisen.

Befindet sich der Spreizanker 1 wie beschrieben im Ankerloch, wird über den Schraubenkopf 19 und den Ankerschaft 3 der Spreizkörper 4 axial von der Spreizhülse 5 entfernt, die mit dem Schub- und Zugelement 14 rückgehalten wird, wobei der das Federelement 17 bildende Flansch des Schub- und Zugelements 14 stärker vorgespannt wird. Dadurch kommen die freien Enden der Spreizlaschen 10 der Spreizhülse 5 frei aus der Ringstufe 11 des Spreizkörpers 4, der zugleich auch die Vorspanneinrichtung 13 bildet. Die Spreizlaschen 10 federn radial nach außen gegen eine Umfangswand des Ankerlochs, wodurch die Spreizhülse 5 axial und drehfest in einer Montagestellung im Ankerloch gehalten ist, wenngleich möglicherweise auch nur mit mäßiger Spannkraft, welche jedoch ausreichend ist, den Spreizanker 1 im Ankerloch vorzufixieren. Das Auseinanderfedern der Spreizlaschen 10 kann auch als "Aufspreizen" oder "Voraufspreizen" der Spreizlaschen 10 beziehungsweise der Spreizhülse 5 aufgefasst werden.

Nach diesem Aufspreizen der Spreizhülse 5 wird der Schraubenkopf 19 entlastet, woraufhin das vorgespannte Federelement 17 des Schub- und Zugelements 14 die Spreizhülse 5 wieder in Richtung des Spreizkörpers 4 bewegt, wodurch die freien Enden der Spreizlaschen 10 der Spreizhülse 5 außen in Anlage an dem kegelstumpfförmigen Spreizabschnitt 7 des Spreizkörpers 4 gelangen. Durch Reibschluss ist der Spreizkörper 4 drehfest mit der Spreizhülse 5 gehalten, die ihrerseits drehfest in dem Ankerloch ist.

Durch Drehen des Ankerschafts 3 am Schraubenkopf 19 wird der auf den Ankerschaft 3 geschraubte Spreizkörper 4 in die Spreizhülse 5 und tiefer zwischen die Spreizlaschen 10 gezogen und spreizt die Spreizlaschen 10 stärker nach außen, wodurch der Spreizanker 1 in einem Endzustand fest im Ankerloch verankert wird. Das Einziehen des Spreizkörpers 4 zwischen die Spreizlaschen 10 kann auch als "Einziehen" des Spreizkörpers 4 in die Spreizhülse 5 und das Nachaußendrücken der Spreizlaschen 10 als Aufspreizen der Spreizhülse 5 aufgefasst werden.

Zu einer Befestigung eines nicht dargestellten Anbauteils an dem Ankergrund wird der Spreizanker 1 mit der in die Setzstellung vorgespannten Spreizhülse 5 durch ein Durchgangsloch in dem Anbauteil in das Ankerloch eingebracht, bis das Federelement 17 am Anbauteil und das Anbauteil am Ankergrund anliegt. Beim Beaufschlagen des Schraubenkopfs 19 zum Ankergrund stützt sich das Federelement 17 über das Anbauteil am Ankergrund ab, wodurch das Federelement 17, wie oben beschrieben, stärker vorgespannt wird, wenn über das Schub- und Zugelement 14 die freien Enden der Spreizlaschen 10 aus der Ringstufe 11 des Spreizkörpers 4, der zugleich auch die Vorspanneinrichtung 13 bildet, herausgezogen werden.

### Bezugszeichenliste

- 1: Spreizanker
- 2: Schraube
- 3: Ankerschaft
- 4: Spreizkörper
- 5: Spreizhülse
- 6: Gewinde
- 7: Spreizabschnitt
- 8: zylindrischer Abschnitt
- 9: Längsschlitz
- 10: Spreizlaschen
- 11: Ringstufe
- 12: Stufe
- 13: Vorspanneinrichtung
- 14: Schub- und Zugelement
- 15: Wulst
- 16: Schnappverbindung
- 17: Federelement
- 18: Unterlegscheibe
- 19: Schraubenkopf
- 20: Aufnahme

## Patentansprüche

1. Spreizanker zu einer Verankerung in einem Ankerloch in einem Ankergrund, mit einer Spreizhülse (5), die zum Verankern des Spreizankers (1) in dem Ankerloch aufspreizbar ist, und mit einem Spreizkörper (4), der zum Aufspreizen der Spreizhülse (5) in die Spreizhülse (5) einziehbar ist, **dadurch gekennzeichnet, dass** der Spreizanker (1) eine Vorspanneinrichtung (13) für die Spreizhülse (5) aufweist, die die Spreizhülse (5) in einer nicht aufgespreizten Setzstellung vorgespannt hält, derart, dass die Spreizhülse (5) selbst unter Spannung steht, und dass die Spreizhülse (5) durch die Spannung aufspreizt, wenn sie von der Vorspanneinrichtung (13) freikommt.

2. Spreizanker nach Anspruch 1, **dadurch gekennzeichnet, dass** die Vorspanneinrichtung (13) die Spreizhülse (5) außen übergreift und dadurch in der Setzstellung vorgespannt hält und dass die Spreizhülse (5) durch eine Relativbewegung der Vorspanneinrichtung (13) in Bezug auf die Spreizhülse (5) in einer Längsrichtung des Spreizankers (1) von der Vorspanneinrichtung (13) freikommt.

3. Spreizanker nach Anspruch 1 oder 2, **dadurch gekennzeichnet, dass** der Spreizkörper (4) die Vorspanneinrichtung (13) aufweist.

4. Spreizanker nach Anspruch 3, **dadurch gekennzeichnet, dass** der Spreizkörper (4) eine Aufnahme (20) für die Spreizhülse (5) aufweist, die die Spreizhülse (5) außen übergreift und in der nicht aufgespreizten Setzstellung vorgespannt hält, wenn die Spreizhülse (5) in die Aufnahme (20) greift.

5. Spreizanker nach Anspruch 4, **dadurch gekennzeichnet, dass** die Aufnahme (20) eine nach innen gerichtete Stufe (11) aufweist, die die Spreizhülse (5) außen übergreift und vorgespannt hält.

6. Spreizanker nach einem oder mehreren der vorhergehenden Ansprüche, **dadurch gekennzeichnet, dass** der Spreizanker (1) ein Schub- und Zugelement (14) aufweist, welches zum Bewegen der Spreizhülse (5) in Bezug auf die Vorspanneinrichtung (13) in der Längsrichtung des Spreizankers (1) mit der Spreizhülse (5) verbunden ist.

7. Spreizanker nach Anspruch 6, **dadurch gekennzeichnet, dass** das Schub- und Zugelement (14) durch eine Schnappverbindung (16) oder eine Rastverbindung mit der Spreizhülse (5) verbunden ist.

8. Spreizanker nach Anspruch 6 oder 7, **dadurch gekennzeichnet, dass** das Schub- und Zugelement (14) rohrförmig ist und von einem Ankerschaft (3) durchgriffen wird, der mit dem Spreizkörper (4) verbunden ist.

9. Spreizanker nach einem oder mehreren der vorhergehenden Ansprüche, **dadurch gekennzeichnet, dass** der Spreizanker (1) ein Federelement (17) aufweist, welches die Spreizhülse (5) in Eingriff mit der Vorspanneinrichtung (13) beaufschlagt.

10. Spreizanker nach Anspruch 9, **dadurch gekennzeichnet, dass** das Federelement (17) die Spreizhülse (5) auf den Spreizkörper (4) beaufschlagt, wenn die Spreizhülse (5) außer Eingriff von der Vorspanneinrichtung (13) ist.

11. Spreizanker nach Anspruch 9 oder 10, **dadurch gekennzeichnet, dass** das Federelement (17) tellerfederförmig ist.

12. Spreizanker nach einem oder mehreren der Ansprüche 6 bis 11, **dadurch gekennzeichnet, dass** das Schub- und Zugelement (14) rohrförmig ist und einen axial federnden Flansch als Federelement (17) aufweist.

13. Verfahren zum Verankern eines Spreizankers nach einem oder mehreren der vorhergehenden Ansprüche in einem Ankerloch in einem Ankergrund, **dadurch gekennzeichnet, dass** der Spreizanker (1) in das Ankerloch eingebracht wird, wobei die Vorspanneinrichtung (13) die Spreizhülse (5) in der nicht aufgespreizten Setzstellung vorgespannt hält, und dass die Spreizhülse (5) in dem Ankerloch außer Eingriff von der Vorspanneinrichtung (13) gebracht wird, so dass die Spreizhülse (5) aufspreizt.

14. Verfahren nach Anspruch 13, **dadurch gekennzeichnet, dass** der Spreizkörper (4) ein Federelement (17) aufweist, dass zum Außereingriffbringen der Spreizhülse (5) von der Vorspanneinrichtung (13) das Federelement (17) gespannt wird und dass das Federelement (17) anschließend die Spreizhülse (5) auf den Spreizkörper (4) beaufschlagt, wenn es entspannt wird.

15. Verfahren nach Anspruch 13 oder 14, **dadurch gekennzeichnet, dass** nach dem Aufspreizen der Spreizhülse (5) der Spreizkörper (4) in die Spreizhülse (5) gezogen und die Spreizhülse (5) dadurch stärker aufgespreizt wird.

## Claims

1. Expansible anchor for an anchoring in an anchoring hole in an anchoring substrate, having an expansion sleeve (5) which is expansible in order to anchor the expansible anchor (1) in the anchoring hole, and having an expander body (4) which is arranged to be drawn into the expansion sleeve (5) in order to expand the expansion sleeve (5), **characterised in that** the expansible anchor (1) has a tensioning device (13) for the expansion sleeve (5), which tensioning device holds the expansion sleeve (5) under tension in a non-expanded setting position in such a way that the expansion sleeve (5) itself is under tension; and the expansion sleeve (5) expands as a result of the tension when it comes free of the tensioning device (13).

2. Expansible anchor according to claim 1, **characterised in that** the tensioning device (13) engages externally over the expansion sleeve (5) and thereby holds the latter under tension in the setting position; and the expansion sleeve (5) comes free of the tensioning device (13) by a relative movement of the tensioning device (13) in relation to the expansion sleeve (5) in a longitudinal direction of the expansible anchor (1).

3. Expansible anchor according to claim 1 or 2, **characterised in that** the expander body (4) has the tensioning device (13).

4. Expansible anchor according to claim 3, **characterised in that** the expander body (4) has a receiver (20) for the expansion sleeve (5), which receiver engages externally over the expansion sleeve (5) and holds the latter under tension in the non-expanded setting position when the expansion sleeve (5) engages in the receiver (20).

5. Expansible anchor according to claim 4, **characterised in that** the receiver (20) has an inward-facing step (11) which engages externally over the expansion sleeve (5) and holds the latter under tension.

6. Expansible anchor according to one or more of the preceding claims, **characterised in that** the expansible anchor (1) has a pushing and pulling element (14) which is connected to the expansion sleeve (5) in order to move the expansion sleeve (5) in relation to the tensioning device (13) in the longitudinal direction of the expansible anchor (1).

7. Expansible anchor according to claim 6, **characterised in that** the pushing and pulling element (14) is connected to the expansion sleeve (5) by a snap connection (16) or a latching connection.

8. Expansible anchor according to claim 6 or 7, **characterised in that** the pushing and pulling element (14) is tubular and has passing through it an anchor shank (3) which is connected to the expander body (4).

9. Expansible anchor according to one or more of the preceding claims, **characterised in that** the expansible anchor (1) has a resilient element (17) which urges the expansion sleeve (5) into engagement with the tensioning device (13).

10. Expansible anchor according to claim 9, **characterised in that** the resilient element (17) urges the expansion sleeve (5) onto the expander body (4) when the expansion sleeve (5) is out of engagement with the tensioning device (13).

11. Expansible anchor according to claim 9 or 10, **characterised in that** the resilient element (17) has the shape of a disc spring.

12. Expansible anchor according to one or more of claims 6 to 11, **characterised in that** the pushing and pulling element (14) is tubular and has an axially resilient flange as resilient element (17).

13. Method of anchoring an expansible anchor according to one or more of the preceding claims in an anchoring hole in an anchoring substrate, **characterised in that** the expansible anchor (1) is introduced into the anchoring hole, with the tensioning device (13) holding the expansion sleeve (5) under tension in the non-expanded setting position; and the expansion sleeve (5) in the anchoring hole is disengaged from the tensioning device (13) so that the expansion sleeve (5) expands.

14. Method according to claim 13, **characterised in that** the expander body (4) has a resilient element (17); the resilient element (17) is subjected to tension in order to disengage the expansion sleeve (5) from the tensioning device (13); and the resilient element (17) subsequently urges the expansion sleeve (5) onto the expander body (4) when the tension is relieved.

15. Method according to claim 13 or 14, **characterised in that,** after the expansion of the expansion sleeve (5), the expander body (4) is drawn into the expansion sleeve (5) and the expansion sleeve (5) thereby undergoes greater expansion.

## Revendications

1. Pièce d'ancrage expansible conçue pour un ancrage dans un trou d'ancrage pratiqué dans une base d'ancrage, comprenant une douille expansible (5) pouvant être déployée en vue d'ancrer ladite pièce d'ancrage expansible (1) dans ledit trou d'ancrage, et un corps d'écartement (4) pouvant être enfoncé dans la douille expansible (5) en vue de déployer ladite douille expansible (5), **caractérisée par le fait que** ladite pièce d'ancrage expansible (1) est munie d'un dispositif (13) de précontrainte de la douille expansible (5), qui maintient ladite douille expansible (5) à l'état précontraint, dans une position de mise en place non déployée, de façon telle que ladite douille expansible (5) soit par elle-même soumise à une tension ; et **par le fait que** ladite douille expansible (5) se déploie, sous l'effet de la tension, lorsqu'elle se libère dudit dispositif de précontrainte (13).

2. Pièce d'ancrage expansible selon la revendication 1, **caractérisée par le fait que** le dispositif de précontrainte (13) coiffe extérieurement la douille expansible (5) et la maintient, de la sorte, à l'état précontraint dans la position de mise en place ; et **par le fait que** la douille expansible (5) se libère du dispositif de précontrainte (13) suite à un mouvement relatif dudit dispositif de précontrainte (13), par rapport à ladite douille expansible (5), dans une direction longitudinale de ladite pièce d'ancrage expansible (1).

3. Pièce d'ancrage expansible selon la revendication 1 ou 2, **caractérisée par le fait que** le corps d'écartement (4) est pourvu du dispositif de précontrainte (13).

4. Pièce d'ancrage expansible selon la revendication 3, **caractérisée par le fait que** le corps d'écartement (4) comporte un logement (20) affecté à la douille expansible (5), qui coiffe extérieurement ladite douille expansible (5) et la maintient à l'état précontraint, dans la position de mise en place non déployée, lorsque ladite douille expansible (5) s'engage dans ledit logement (20).

5. Pièce d'ancrage expansible selon la revendication 4, **caractérisée par le fait que** le logement (20) est muni d'un décrochement (11) dirigé vers l'intérieur, qui coiffe extérieurement la douille expansible (5) et la maintient à l'état précontraint.

6. Pièce d'ancrage expansible selon l'une ou plusieurs des revendications précédentes, **caractérisée par le fait que** ladite pièce d'ancrage expansible (1) comporte un élément (14) de poussée et de traction qui est relié à la douille expansible (5) en vue de mouvoir ladite la douille expansible (5), par rapport au dispositif de précontrainte (13), dans la direction longitudinale de ladite pièce d'ancrage expansible (1).

7. Pièce d'ancrage expansible selon la revendication 6, **caractérisée par le fait que** l'élément (14) de poussée et de traction est relié à la douille expansible (5) au moyen d'une liaison (16) par encliquetage, ou d'une liaison par crantage.

8. Pièce d'ancrage expansible selon la revendication 6 ou 7, **caractérisée par le fait que** l'élément (14) de poussée et de traction est de forme tubulaire, et est traversé par un fût d'ancrage (3) relié au corps d'écartement (4).

9. Pièce d'ancrage expansible selon l'une ou plusieurs des revendications précédentes, **caractérisée par le fait que** ladite pièce d'ancrage expansible (1) est dotée d'un élément élastique (17) qui sollicite la douille expansible (5) pour la mettre en prise avec le dispositif de précontrainte (13).

10. Pièce d'ancrage expansible selon la revendication 9, **caractérisée par le fait que** l'élément élastique (17) sollicite la douille expansible (5) en direction du corps d'écartement (4) lorsque ladite douille expansible (5) est désengagée d'avec le dispositif de précontrainte (13).

11. Pièce d'ancrage expansible selon la revendication 9 ou 10, **caractérisée par le fait que** l'élément élastique (17) revêt la forme d'une rondelle Belleville.

12. Pièce d'ancrage expansible selon l'une ou plusieurs des revendications 6 à 11, **caractérisée par le fait que** l'élément (14) de poussée et de traction est de forme tubulaire et comporte, en tant qu'élément élastique (17), une aile douée d'élasticité dans le sens axial.

13. Procédé d'ancrage, dans un trou d'ancrage pratiqué dans une base d'ancrage, d'une pièce d'ancrage expansible conforme à l'une ou plusieurs des revendications précédentes, **caractérisé par le fait que** la pièce d'ancrage expansible (1) est introduite dans le trou d'ancrage, le dispositif de précontrainte (13) maintenant alors la douille expansible (5) à l'état précontraint, dans la position de mise en place non déployée ; et **par le fait que** ladite douille expansible (5) est désengagée d'avec ledit dispositif de précontrainte (13), dans ledit trou d'ancrage, de telle sorte que ladite douille expansible (5) se déploie.

14. Procédé selon la revendication 13, **caractérisé par le fait que** le corps d'écartement (4) est muni d'un élément élastique (17) ; **par le fait que** ledit élément élastique (17) est bandé en vue de désengager la douille expansible (5) d'avec le dispositif de précontrainte (13) ; et **par le fait que**, lorsqu'il est soulagé, ledit élément élastique (17) sollicite ensuite ladite douille expansible (5) en direction dudit corps d'écartement (4).

15. Procédé selon la revendication 13 ou 14, **caractérisé par le fait que** le corps d'écartement (4) est enfoncé dans la douille expansible (5) après le déploiement de ladite douille expansible (5), laquelle douille expansible (5) s'en trouve ainsi plus fortement déployée.
